## Europäisches Patentamt

## European Patent Office

## Office européen des brevets

(11) Publication number: **0 177 473**
**B1**

(12) **EUROPEAN PATENT SPECIFICATION**

(45) Date of publication of patent specification: **07.02.90**

(51) Int. Cl.⁵: **B 62 D 27/06, B 62 D 33/02**

(21) Application number: **85850301.4**

(22) Date of filing: **30.09.85**

(54) **Device for detachably mounting a post to a vehicle platform and a flap or the like to the post.**

(30) Priority: **01.10.84 SE 8404902**

(43) Date of publication of application:
**09.04.86 Bulletin 86/15**

(45) Publication of the grant of the patent:
**07.02.90 Bulletin 90/06**

(84) Designated Contracting States:
**AT DE FR GB IT NL SE**

(56) References cited:
**SE-B- 443 542**
**SE-C- 218 048**

(73) Proprietor: **Nordisk Excenter Karosseridetaljer AB**
**Box 2008**
**S-831 02 Östersund (SE)**

(72) Inventor: **Thoresson, Eddie**
**Sörahemsvägen 94**
**S-184 00 Akersberga (SE)**

(74) Representative: **Westerlund, Christer et al**
**L.A. Groth & Co Patentbyra AB**
**Västmannagatan43**
**S-113 25 Stockholm (SE)**

EP 0 177 473 B1

## Description

### Technical Field

The present invention relates to a device for removably attaching a post to a load platform, and a sideboard or the like to the post, the device including at least a first and at least a second locking member displaceably mounted on the post, these members being adapted respectively to engage with the sideboard and platform, and be operated by a single lever accessible from the exterior of the post, the lever being pivotably mounted on the first locking member and via at least one link being connected to the second locking member, and a detent means for ensuring that when the lever is swung to release the post from the platform and the sideboard from the post the second locking member is not taken out of engagement with the platform until the first locking member has been released from the sideboard.

### Background Art

A device of the kind described above is already known from the Swedish patent specification SE—B—320 275. Other, similar devices are known from such as the German Offenlegungsschriften DE—A—3 108 930, DE—A—2 706 063, the Swedish patent specifications SE—B—218 048 and SE—B—379 701 and the Swedish patent application SE—B—443 542.

A disadvantage burdening several of the above-mentioned devices of the prior art is that when only the sideboard is to be released from the post, the post itself must be sometimes at least partially released from the platform, which can cause large problems.

Other disadvantages with certain of the known devices are that play occurs between operating lever and locking means, making the device less reliable, and that the lever can suddenly swing out to an open position away from the post, thus causing personal injury, this swinging movement being caused by strong springs needing to be used so that the sideboard may be released from the post under favourable conditions. A further disadvantage is that a large force is required to release the locking means from the post and/or the sideboards if the load on the load platform exercises large pressure against them. A still further disadvantage is that a large number of details is required to achieve the desired safety for releasing the sideboard from the post before releasing the post from the platform, that these details have a complicated shape and are difficult to assemble and dismantle, and that the complicated coaction and motions of the details involve unreliable function. A still further disadvantage is that the lever in the final phase of its opening motion can unintentionally cause, due to recoil action, movement of the locking means associated with the post, away from its locked position.

### Disclosure of Invention

An object of the present invention is to mitigate the disadvantages with previously known devices of the kind mentioned above.

This object is achieved by the invention having been given the distinguishing features disclosed in the characterising portions of the claims.

### Description of Figures

Figure 1 is a longitudinal section of a post provided with the inventive device, it being illustrated in the locking position for both a post and a sideboard.

Figure 2 is a longitudinal section at right angles to that in Figure 1 with the device in the same locking position.

Figure 3 is a longitudinal section of the post and device of Figures 1 and 2 with the device in a position of locking solely for the post, and

Figure 4 is a longitudinal section of the post and device of Figures 1, 2 and 3 with the device in a position where both the post and the sideboard are released.

### Preferred Embodiment

In the figures there is illustrated a vertical outer edge of a load platform on a truck, a post 2 being removably attached to the platform, which is provided with a hook 1a and a stirrup 1b coacting with the post and with a locking member fastened thereto. The post is also provided with a further locking member for releasable connecting between the post and a sideboard 3 thrusting into the post with stirrup-shaped members, of which one, 3a, is illustrated. Both locking members are operated by a lever 4 mounted on the post.

The post 2 is provided with an internal, elongate, U-shaped reinforcing member 2b and a reinforcing plate 5 engaging against the platform edge. The lower edge 5a of this plate is inserted between the platform edge and the hook 1a so that the post cannot be displaced horizontally in relation to the platform. In this position a lower horizontal portion of the post rests against the upper side of the hook 1a.

The locking member for removable attachment of the post 2 to the platform 1 includes an elongate wedge 6, which is movable into and out of the stirrup 1b thrusting into a hole in the plate 5. The wedge 6 is provided with a shaft 7, on which one end of a link 15 is pivotably fastened. The other end of the link 15 is pivotably fastened to the lever 4 via a shaft 10.

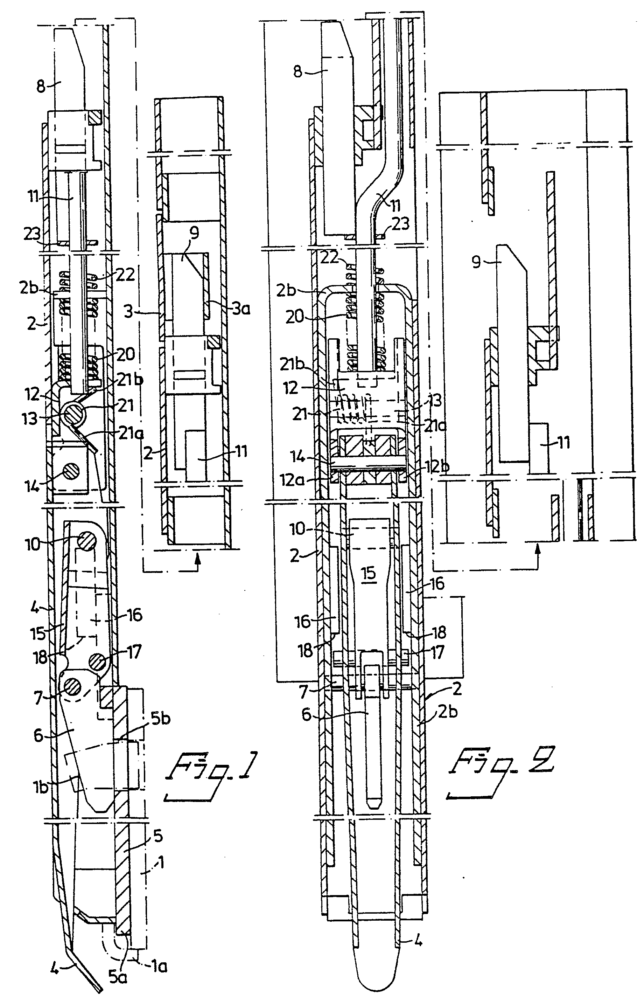

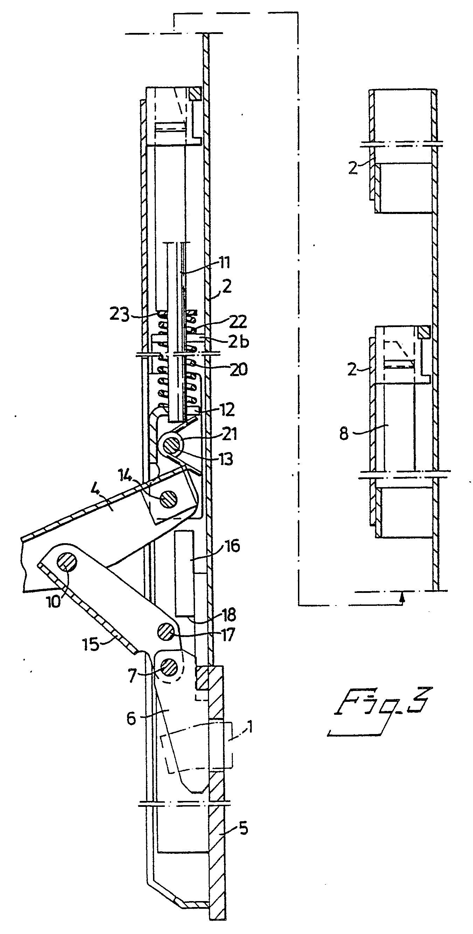

The second locking member for removable attachment of the sideboard 3 to the post 2 includes two tongues 8 and 9, which are movable into and out from the sideboard stirrups 3a when the sideboard is lifted up and engages against the post. The tongues 8 and 9 are mutually interconnected by a rod 11, guided for movement in the longitudinal direction of the post. The rod 11 is also connected to a U-shaped member 12, which is guided for movement in the longitudinal direction inside the U-shaped member 2b, the member 12 being provided with ears 12a and 12b connected with each other via a shaft 14. The lever 4 has a U-shaped cross section, and one end of it is pivotably mounted on the shaft 14. A helical spring 21 is placed round a shaft 13, fastened between the ears 12a and 12b, and one end of the spring terminates in a limb 21a inserted in a notch on the end of the lever 4 at the shaft 14, while the other spring end terminates in a limb 21b engaging against the member 12, as is illustrated in Figures 1 and 2.

Further details in the device in accordance with the invention will now be described in connection with the function thereof, it being assumed that the starting state is where the post 2 is locked to the platform and a sideboard 3 is locked to the post, i.e. the parts of the device are in the positions illustrated in Figures 1 and 2.

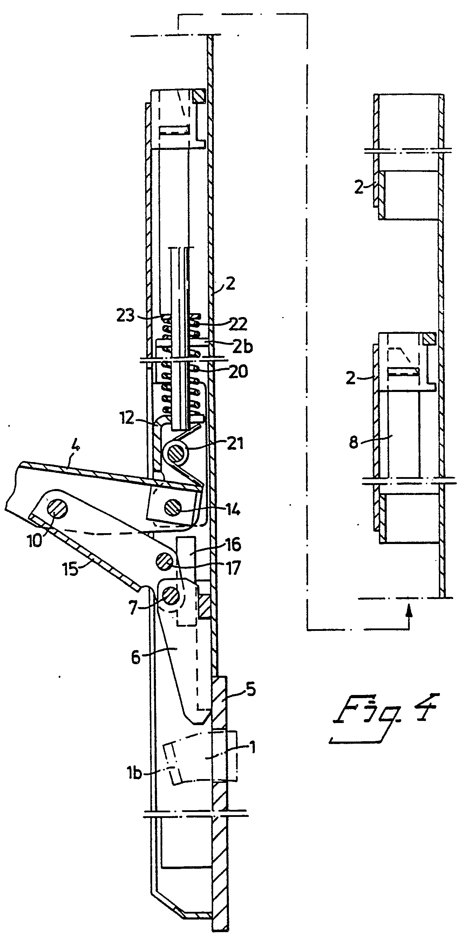

When the sideboard 3 is to be released from the post 2, i.e. when the first locking member is to be released, the lever 4 lying within the outer contour of the post is lifted from the position illustrated in Figure 1, where the shaft 10 is to the right of the line through the shafts 7 and 14. The shaft is maintained in this over dead centre position by the action of a compression spring 20 biassed between members 2b and 12, urging the rod 11 towards the platform 1, and also by the action of the spring 21, urging the lever anticlockwise about the shaft 14. When the lever 4 is lifted, the shaft 10 passes over the mentioned dead centre line against the bias of the springs 20 and 21 and is moved away from the post. The bias in the spring 20 and the weight of the members 8, 9, 11, 12 etc result in that the tongues 8, 9 are simultaneously moved a distance downwards in Figures 1 and 2. For moving the tongues further downwards, and entirely out of engagement with the stirrups 3a, the lever 4 is swung further clockwise about the shaft 14 towards the position illustrated in Figure 3, the link 15 pivoting about the shafts 7 and 10 against the bias of the spring 21, to take the member 12, rod 11 and the tongues downwards in the figures. Even though a load on the platform 1 presses heavily against the sideboard 3 and/or the post 2, making more difficult the withdrawal of the tongues 8, 9, they are forced out of engagement with the sideboard stirrups 3a before the wedge 6 is displaced, because both ends of a shaft 17 on the link 15 (at 18) come into abutment with a stop formed as two plates 16 fastened to the elongate U-shaped member 2b, if the distance between the shafts 7 and 14 is not sufficiently large. On the other hand, if the withdrawal of the tongues 8, 9 is not made more difficult, the shaft 14 will be at a distance from the shaft 7 when the lever 4 is swung clockwise, such that the shaft 17 passes by the stop 16 in the manner illustrated in Figure 3.

When the tongues 8, 9 are completely withdrawn from the stirrups 3a, which occurs when the lever 4 is turned a small angle clockwise about the shaft 14 from the position illustrated in Figure 3, and it is also desired to release the second locking member (the wedge 6) the lever is turned further clockwise, the link 15 then pulling the wedge upwards in the figures until the lever cannot be swung any more. This position is illustrated in Figure 4.

In Figure 4 the lever 4 is thus illustrated as taken to its clockwise end position, where the wedge 6 is completely withdrawn from the stirrup 1b. This position is stable, since the spring 21 is biassed against the lever 4. When the locking members assume the positions in Figure 4, the post may be removed from the platform 1 by first swinging the post anticlockwise about the hook 1a and then lifting the post from it.

A resilient member in the form of a compression spring 22 surrounds the rod 11 and is inserted between the member 2b and a ring 23 fastened to the rod 11 and the tongue 8. This spring dampens the movement of rod and tongues, and thereby the movement of the lever in the final phase of the opening movement, thus preventing movement of the wedge 6 from the locking position due to a possible recoil action caused by the springs 20 and 21, should the lever unexpectedly swing up to the position in Figure 4.

Locking of the post 2 to the platform 1 and the sideboard to the post takes place in reverse of what has been described above and should not need any description.

Although only one embodiment of the inventive device has been described above and illustrated in the figures, it should be understood that the invention is not restricted to this embodiment, but only by the disclosures in the claims.

**Claims**

1. Device for removably attaching a post (2) to a load platform (1) and a sideboard (3) or the like to the post, said device including at least a first and at least a second locking member (8, 9, 6) displaceably mounted on the post, these members being adapted respectively to engage with the sideboard and platform, and to be operated by a single lever (4) accessible from the exterior of the post, said lever being pivotably mounted on the first locking member (8, 9) and via at least one link (15) being connected to the second locking member (6), and a detent means (16, 17) for ensuring that when the lever is swung to release the post (2) from the platform (1) and the sideboard (3) from the post the second locking member is not taken out of engagement with the platform until the first locking member has been released from the sideboard, characterized in that the detent means (16, 17) includes an actuating member (17) mounted in a fixed position on the link (15) and a stop (16) fastened to the post (2), the actuating member being brought into abutment against the stop should the first locking member (8, 9) be prevented from being taken out of engagement with the sideboard (3) even though the lever (4) has been taken to its opening position, and past which the actuating member passes in the case where the first locking member is permitted to be moved out of engagement with the sideboard when the lever is moved to its opening position.

2. Device as claimed in claim 1, characterized in that the actuating member is a shaft (17) and that the stop it at least one abutment plate (16) fastened to the inside of the post (2).

3. Device as claimed in claim 1 or 2, characterized in that there is a resilient member (22) acting between the first locking member (8, 9) and the post (2) for dampening the movement of the first locking member and thereby that of the lever (4) in the final phase of the movement of said locking member towards the opening position, for preventing the movement of the second locking member (6) from the locking position by recoil action.

4. Device as claimed in any one of the preceding claims, including a first spring (20) acting between the post (2) and the first locking member (8, 9) for maintaining the lever (4) in an over dead centre position along the post, in which the locking members (6, 8, 9) lock the post to the platform (1) and the sideboard (3) to the post, characterized in that there is a second spring (21) acting between the lever (4) and the first locking member (8, 9) for contributing to the maintenance of the lever in said over dead centre position and/ or in a position projecting out from the post, in which the locking members (6, 8, 9) do not engage with the post (2) nor with the sideboard (3).

## Patentansprüche

1. Einrichtung zum Lösbarbefestigen einer Runge (2) auf eine Ladeplattform (1) und einer Bordwand (3) oder dergleichen auf diese Runge, umfassend zumindest eine erste und zumindest eine zweite an der Runge verschiebbar angeordnete Sicherungsvorrichtung (8, 9, 6), wobei die genannten Vorrichtungen jeweils zum Eingreifen mit der Bordwand und der Plattform vorgesehen sind und durch einen einzelnen, von der Aussenseite der Runge erreichbaren Hebel (4) zu betätigen sind, welcher an der ersten Sicherungsvorrichtung (8, 9) schwenkbar angeordnet und durch zumindest ein Gelenkstück (15) mit der zweiten Sicherungsvorrictung (6) verbunden ist, sowie eine Sperrvorrichtung (16, 17) zum Sicherstellen, dass die zweite Sicherungsvorrichtung, beim Schwenken des Hebels zum Freimachen der Runge (2) von der Plattform (1) und der Bordwand (3) von der Runge, erst dann ausser Eingriff mit der Plattform gebracht wird, wenn die erste Sicherungsvorrichtung von der Bordwand freigemacht worden ist, dadurch gekennzeichnet, dass die Sperrvorrichtung (16, 17) eine in einer festen Position am Gelenkstück (15) angeordnete Betätigungsvorrichtung (17) sowie einen an der Runge (2) befestigten Anschlag (16) umfasst, an welchem die Betätigungsvorrichtung zum Anliegen gebracht wird, wenn, obwohl der Hebel (4) in seine Öffnungslage gebracht worden ist, die Bewegung der ersten Sicherungsvorrichtung (8, 9) ausser Eingriff mit der Bordwand (3) verhindert wird, und an welchem die Betätigungsvorrichtung sich dann vorbeibewegt, wenn bei Bewegung des Hebels in seine Öffnungslage die erste Sicherungsvorrichtung erlaubt ist, sich ausser Eingriff mit der Bordwand zu bewegen.

2. Einrichtung nach Anspruch 1, dadurch gekennzeichnet, dass die Betätigungsvorrichtung eine Welle (17) ist und dass der Anschlag zumindest eine an der Innenseite der Runge (2) befestigte Stützscheibe (16) ist.

3. Einrichtung nach Anspruch 1 oder 2, dadurch gekennzeichnet, dass zwischen der ersten Sicherungsvorrichtung (8, 9) und der Runge (2), zur Dämpfung der Bewegung der ersten Sicherungsvorrichtung und somit der des Hebels (4) in der Endphase der Bewegung der genannten Sicherungsvorrichtung in Richtung auf die Öffnungslage, ein elastischer Körper (22) vorgesehen ist um zu verhindern, dass sich die zweite Sicherungsvorrichtung (6) durch Rücklaufwirkung aus der Sicherungslage bewegt.

4. Einrichtung nach einem der vorhergehenden Ansprüche, mit einer zwischen der Runge und der ersten Sicherungsvorrichtung (8, 9) wirkenden ersten Feder (20) zum Halten des Hebels (4) in einer oberen Totpunktstellung entlang der Runge, wo die Sicherungsvorrichtungen (6, 8, 9) die Runge an der Plattform (1) und die Bordwand (3) an der Runge festhalten, dadurch gekennzeichnet, dass zwischen dem Hebel (4) und der ersten Sicherungsvorrichtung (8, 9) eine zweite Feder (21) vorgesehen ist um dazu beizutragen, dass der Hebel in der genannten oberen Totpunktstellung und/oder in einer von der Runge hinausragenden Stellung gehalten wird, in der die Sicherungsvorrichtungen (6, 8, 9) weder mit der Runge (2) noch mit der Bordwand (3) eingreifen.

## Revendications

1. Dispositif pour fixer de manière amovible un montant (2) sur une plate-forme de chargement (1) et une ridelle (3) ou similaire sur le montant, le dispositif comprenant au moins un premier et au moins un deuxième élément de blocage (8, 9, 6) montés de manière déplaçable sur le montant, ces éléments étant adaptés pour s'engager respectivement avec la ridelle et avec la plateforme, et pour être actionnés par un seul levier (4) accessible de l'extérieur du montant, le levier étant monté pivotant sur le premier élément de blocage (8, 9) et étant relié au deuxième élément de blocage (6) par l'intermédiaire d'au moins un élément de liaison (15), et un moyen de détente (16, 17) pour assurer que, lorsque le levier est pivoté pour libérer le montant (2) de la plateforme (1) et la ridelle (3) du montant, le deuxième élément de blocage ne soit pas désengagé d'avec la plate-forme jusqu'à ce que le premier élément de blocage ait été libéré de la ridelle, caractérisé en ce que le moyen de détente (16, 17) comprend un élément d'actionnement (17) monté à une position fixe sur l'élément de liaison (15) et une butée (16) fixée sur le montant (2), l'élément d'actionnement venant buter contre la butée si le premier élément de blocage (8, 9) était empêché d'être désengagé d'avec la ridelle (3) alors même que le levier (4) a été amené à sa position d'ouverture, et l'élément d'actionnement passant du-delà de la butée dans le cas où le premier élément de blocage est autorisé à être déplacé hors d'engagement d'avec la ridelle lorsque le levier est déplacé à sa position d'ouverture.

2. Dispositif selon la revendication 1, caractérisé en ce que l'élément d'actionnement est un arbre (17), et en ce que la butée est au moins une plaque de butée (16) fixée au côté intérieur du montant (2).

3. Dispositif selon la revendication 1 ou 2, caractérisé en ce qu'il y a un élément élastique (22) agissant entre le premier élément de blocage (8, 9) et le montant (2) pour amortir le mouvement du premier élément de blocage et par suite celui du levier (4) dans la phase finale de déplacement de cet élément de blocage vers la position d'ouverture, afin d'empêcher le mouvement du deuxième élément de blocage (6) depuis la position de blocage par une action de rembobinage.

4. Dispositif selon l'une quelconque des revendications précédentes, comprenant un premier ressort (20) agissant entre le montant (2) et le premier élément de blocage (8, 9) pour maintenir le levier à une position au-dessus du point mort le long du montant, à laquelle les éléments de blocage (6, 8, 9) bloquent le montant sur la plate-forme (1) et la ridelle (3) sur le montant, caractérisé en ce qu'il y a un deuxième ressort (21) agissant entre le levier (4) et le premier élément de blocage (8, 9) pour contribuer au maintien du levier à cette position au-dessus du point mort et/ ou à une position dépassant à l'extérieur du montant, à laquelle les éléments de blocage (6, 8, 9) ne s'engagent ni avec le montant (2), ni avec la ridelle (3).

Fig. 1

Fig. 2

Fig.3

Fig. 4